# EUROPEAN PATENT SPECIFICATION

(11) **EP 2 459 670 B1**
(45) Date of publication and mention of the grant of the patent: **01.05.2013**
(21) Application number: 10744615.5
(22) Date of filing: 16.07.2010
(51) Int. Cl.: C10G 1/04, C09K 8/035, C09K 8/584, C09K 8/60, C09K 8/68

(54) **MICROEMULSION TO IMPROVE SHALE GAS PRODUCTION BY CONTROLLING WATER IMBIBITION**
MIKROEMULSION FÜR VERBESSERTE SCHIEFERGASPRODUKTION MITTELS STEUERUNG DER WASSERAUFSAUGUNG
MICROEMULSION POUR AMELIORER LA PRODUCTION DE GAZ DE SHALE PAR REGULATION DE L'IMBIBATION D'EAU

(30) Priority: 27.07.2009 US 228736 P; 14.07.2010 US 836082
(43) Date of publication of application: 06.06.2012
(73) Proprietor: Services Pétroliers Schlumberger, 75007 Paris (FR); Schlumberger Holdings Limited, Tortola (VG); Schlumberger Technology B.V., 2514 JG The Hague (NL); PRAD Research and Development Limited, Road Town, Tortola (VG)
(72) Inventor: ALI, Syed, A., Sugar Land, TX 77478 (US); COUILLET, Isabelle, 50450 Kuala Lumpur (MY); ENGLAND, Kevin, W., Houston TX 77094 (US); SAMUEL, Mathew, M., Sugar Land TX 77478 (US)
(74) Representative: Fortt, Simon Merton
(86) International application number: PCT/IB2010/053258
(87) International publication number: WO 2011/013025

(56) References cited:
- US-A- 4 011 908
- US-A1- 2002 132 740
- US-A1- 2007 029 085

## Description

### Field of the Invention

This invention relates generally to methods for treating a well penetrating a subterranean formation. More specifically, the invention relates to a microemulsion to improve shale gas production by controlling water imbibition.

### Background

Some statements may merely provide background information related to the present disclosure and may not constitute prior art.

Hydraulic fracturing is commonly used to stimulate shale gas reservoirs. In mid nineties, most of the shale gas reservoirs were fractured utilizing the crosslinked polymer fluids. In an effort to reduce costs, slickwater fracturing has emerged as the method of choice. The success of slickwater fracturing has been attributed to its ability to contact a larger surface of the reservoir with minimum fracturing fluid damage at the fracture face and within the proppant pack. In a typical treatment several million gallons of water is pumped at an average rate 65 bpm (10.33 cubic meter per minute) with proppant ranging in concentration from 0.25 to 1.0 ppg (0.030 to 0.120 grams per cubic centimeter). Several chemicals are added during the treatment. The common additives include scale inhibitor, friction reducers, biocides, clay stabilizers, oxygen scavengers, surfactants, and the like.

One of the continuing challenges in slickwater fracturing of shale gas reservoirs is the post treatment fluid recovery. Published data show 60 to 90% of the injected fluids stay in the reservoir. It must be assumed that these large quantities of water are trapped in the area surrounding the fracture and within the fracture itself. The trapped fluid has a detrimental effect on the relative permeability and effective flow area and without question impairs well productivity. The water trapping could be due to interfacial tension between the injected slickwater and the reservoir shale, or capillary end effect on and around the vicinity of the face fractured shale. To minimize phase trapping, commonly available surfactants are added to slick water to reduce surface tension between the treating fluid (i.e., slickwater) and gas and thereby recovering more of the treating fluid and restoring the relative permeability to gas.

For strongly water-wet shale gas reservoirs, capillary forces promote the retention of injected in pore spaces; which in-turn curtails the flow of gas into the fracture. Wardlaw and McKeller (Journal of Petroleum Science and Engineering Volume 22, 1998: Wettability and Connate Water Saturation in Hydrocarbon Reservoirs with Bitumen Deposits) found that gas reservoir with residual oil drain water more efficiently than oil-free reservoirs. Apparently, the presence of residual oil alters the reservoir rock wettability to less water-wet. Likewise, if surfactants or other surface-coating chemicals are injected into the shale-gas reservoir, the capillary pressure is reduced by decreasing the gas-water surface tension, and/or rock surface wettability is altered to less water-wet. Penny *et al.* (SPE 12149: Enhanced Load Water-Recovery Techniques Improves Stimulation Results, G.S. Penny, M.Y. Soliman, M.W. Conway and J.E. Briscoe;1983) changed the wettability of the rock surface from water-wet to oil-wet by using surfactant dissolved in methanol and successfully mitigate the water-block effect. Li and Firoozabadi (SPE 62515: Wettability Alteration to Preferential Gas-Wetness in Porous Media and its Effects, K. Li and A. Firoozabadi; 2000) noted that fluorochemical surfactants could alter the water-wet sandstone and chalk surfaces to intermediate-wet or more gas-wet.

There is a need to provide a microemulsion additive that is highly effective in altering the wettability of gas shale reservoir from water-wet to more gas-wet.

### Summary

In a first aspect a method for treating a subterranean formation comprising at least in part tight gas sand and shale rocks is disclosed. The method comprises forming solvent-surfactant blend by combining a solvent, a surfactant and a co-surfactant; adding water to the solvent-surfactant blend to form a microemulsion; wherein the wettability of the formation altered from water-wet to gas-wet, and the amount of water imbibed into the formation is reduced.

In a second aspect, a method for treating tight gas sand and shale subterranean formations is disclosed. The method comprises forming a solvent-surfactant blend by combining a solvent, a surfactant and a co-surfactant; adding a diluent to the solvent-surfactant blend to form a microemulsion; wherein the wettability of the formation altered from water-wet to gas-wet, and the amount of water imbibed into the formation is reduced.

### Detailed Description

The present invention relates to a microemulsion-based system that is able to alter the wettability of a shale gas reservoir from water-wet to intermediate-wet or more gas-wet. This will result in minimizing the amount of water imbibed to the shale formation during a fracturing treatment. The microemulsion system is formed by the combination of solvent surfactant blends with an appropriate oil-based or water-based carrier fluid.

The solvent-surfactant blend generally includes a solvent and surfactant package. In one embodiment, the solvent is selected from the group of dipolar aprotic solvents including N-methyl-2-pyrrolidone, dimethylformamide, dimethylacetamide and dimethyl sulfoxide. One particularly useful solvent is N-methyl-2-pyrrolidone. The N-methyl-2-pyrrolidone is effective due to its solvency, low-toxicity and biodegradability. In an alternate embodiment, the dipolar aprotic solvent may be replaced with refined vegetable oil, such as canola oil. It will also be understood that combinations of oil and different solvents, such as canola oil and N-metyl-2-pyrrolidone, are also encompassed within the scope of some embodiments.

The surfactant of the solvent-surfactant blend is capable of forming an oil-in-water microemulsion upon combination with an appropriate quantity of water. Some examples of suitable surfactants include one or more of the following: lauryl alcohol ethoxylates, linear fatty alcohol ethoxylates (C9-C11), linear fatty alcohol ethoxylates (C12-C13), linear fatty alcohol ethoxylates (C12-C15) and polyorganosiloxanes. One surfactant mixture includes linear fatty alcohol ethoxylates (C11), dicocodimethylquaternary (Tomadry N-4), decyl-dimethyl amine oxide and polyorganosiloxane.

Some exemplary surfactants include, but are not limited to, cationic, anionic, zwitterionic, or nonionic. In other embodiments, the surfactant is a viscoelastic surfactant (VES) fluid system. VES fluid system is a fluid viscosified with a viscoelastic surfactant and any additional materials, such as but not limited to salts, co-surfactants, rheology enhancers, stabilizers and shear recovery enhancers that improve or modify the performance of the viscoelastic surfactant.

The useful VES's include cationic, anionic, nonionic, mixed, zwitterionic and amphoteric surfactants, especially betaine zwitterionic viscoelastic surfactant fluid systems or amidoamine oxide viscoelastic surfactant fluid systems. Examples of suitable VES systems include those described in U.S. Pat. Nos. 5,551,516; 5,964,295; 5,979,555; 5,979,557; 6,140,277; 6,258,859 and 6,509,301. The system of the invention is also useful when used with several types of zwitterionic surfactants. In general, suitable zwitterionic surfactants have the formula:

RCONH-(CH₂)ₐ(CH₂CH₂O)ₘ(CH₂)_{b}-N⁺(CH₃)₂-(CH₂)_{a'}(CH₂CH₂O)_{m'}-(CH₂)_{b'}COO⁻

in which R is an alkyl group that contains from about 14 to about 23 carbon atoms which may be branched or straight chained and which may be saturated or unsaturated; a, b, a', and b' are each from 0 to 10 and m and m' are each from 0 to 13; a and b are each 1 or 2 if m is not 0 and (a+b) is from 2 to about 10 if m is 0; a' and b' are each 1 or 2 when m' is not 0 and (a'+b') is from 1 to about 5 if m is 0; (m+m') is from 0 to about 14; and the O in either or both CH₂CH₂O groups or chains, if present, may be located on the end towards or away from the quaternary nitrogen. Preferred surfactants are betaines.

The surfactant package can further include a co-surfactant, as e.g. glycol ether. Glycol ether component may be used with the solvent-surfactant blend as a coupling agent between the solvent and the surfactant, thereby stabilizing the microemulsion. Although propylene glycol ether is one effective co-surfactant, alternative suitable glycol ethers include, but are not limited to, propylene glycol methyl ether, propylene glycol methyl ether acetate, propylene glycol n-butyl ether, ethylene glycol monobutyl ether, diethylene glycol monobutyl ether acetate, and the like.

The solvent-surfactant blend optionally includes a salt. The addition of a salt to the solvent-surfactant blend reduces the amount of water needed as a carrier fluid and also lowers the freezing point of the well treatment microemulsion. Among the salts that may be added for stability and co-solvent substitution, NaCl, KCl, CaCl2, and MgCl are presently preferred. Others suitable salts can be formed from K, Na, Br, Cr, Cs and Bi families

In another embodiment of the present invention, the viscosity of the microemulsion is increased with Claytone (organophillic clay).

After blending the solvents, surfactants and glycol ethers, a diluent may be added to form a microemulsion. In some cases, the diluent is water; however, any suitable diluent may be used.

In one illustrative example, the microemulsion contains from about 15% to about 20% by volume of the surfactant mixture (linear fatty alcohol ethoxylates (C-11), dicocodimethylquaternary and polyorganosiloxane), from about 10% to about 20% by volume N-methyl-2-pyrrolidone, from about 5% to about 15% propylene glycol ether, and the balance is water.

The microemulsions may be used in slickwater fracturing fluids. When used in slickwater application the microemulsion may be added in any suitable amount to the carrier fluid. In some cases, from about 0.2% to about 2% by volume microemulsion is added to the carrier fluid. Slickwater fracturing fluids typically contain water a friction reducer, biocide, scale inhibitor and clay stabilizer, in addition to other suitable components.

In addition to slickwater hydraulic fracturing fluids, the microemulsion may be used in viscosified fracturing fluids, gravel packs, water conformance control, acid fracturing, waterflood, drilling fluids, wellbore cleanout fluids, fluid loss control fluids, kill fluids, spacers, flushes, pushers, and carriers for materials such as scale, paraffin, and asphaltene inhibitors, and the like. When used, viscosification systems can include polymers, including crosslinked polymers, viscoelastic surfactant systems (VES), fiber viscosification systems, mixed fiber-polymer and fiber-VES systems, slickwater (low viscosity) systems, and so on.

In addition to those applications described above, the microemulsions may also be useful for such operations acidizing operations, drilling operations and hydrogen sulfide mitigation applications. Also, it will be understood that the well treatment microemulsions can be used in additional, alternative applications. For example, it is contemplated that the well treatment microemulsion could also be used to clean surface equipment and downhole equipment.

The well treatment microemulsions can also be used to deliver acids during acidizing operations. Acids commonly used include hydrochloric, acetic, formic, and hydrochloric-hydrofluoric acids. In a presently preferred embodiment, the selected solvent-surfactant blend (dilute or concentrate) is combined with an acidified carrier fluid to prepare a microemulsion suitable for acidizing operations. Preferably, the microemulsion includes about 0.2%-5% by volume of the solvent-surfactant blend and about 3%-28% by volume of acid. In a particularly preferred embodiment, the microemulsion includes about 0.2%-5% of the solvent-surfactant blend and about 15% by volume of hydrochloric acid. The concentration of the well treatment microemulsion in gelled fluids lowers the friction created by contact with conduits, thereby facilitating the injection and withdrawal of the well treatment microemulsion.

As described in U.S. Pat. Application Ser. No. 12/156,201 (U.S. Pat. Appl. Pub. No. 20080287324), using appropriate hydrogen sulfide scavengers, microemulsions can also be used for hydrogen sulfide mitigation. In such cases, the well treatment microemulsions are injected into the wellbore so that escaping hydrogen sulfide gas is "stripped" through the well treatment microemulsions. The microemulsion is periodically injected into problem wells to mitigate hydrogen sulfide production. Alternatively, the microemulsion can be injected downhole via capillary tubing on a continuous basis. In yet another alternate embodiment, the well treatment microemulsion can be placed in a container that is placed in fluid communication with the hydrogen sulfide.

As described in U.S. Pat. Ser. No. 7,392,844, microemulsions may be useful for removal of pipe dope and hydrocarbons, oil based, and synthetic oil based drilling muds and the dispersement of paraffins and asphaltenes. They may further be used as a displacement spacer system, either as a single spacer or as a multiple spacer in conjunction with a second fluid, for the removal of oil/synthetic oil based mud cake and hydrocarbons prior to cementing or prior to introduction of a completion brine.

Any additives normally used in such well treatment fluids can be included, again provided that they are compatible with the other components and the desired results of the treatment. Such additives can include, but are not limited to breakers, anti-oxidants, crosslinkers, corrosion inhibitors, delay agents, fibers, particles, proppant, gravel, buffers, fluid loss additives, pH control agents, solid acids, solid acid precursors, etc. The wellbores treated can be vertical, deviated or horizontal.

## Claims

1. A method for treating a subterranean formation comprising at least in part tight gas sand and shale rocks, the method comprising:
- forming a solvent-surfactant blend by combining a solvent, a surfactant and a co-surfactant;
- adding a diluent to the solvent-surfactant blend to form a microemulsion;
- altering the wettability of a fracture face of the formation from water-wet to gas-wet, and
- reducing the amount of water imbibed into the fracture face of the formation.

2. The method of claim 1, wherein the co-surfactant is glycol ether.

3. The method of claim 1 or 2, wherein the forming a solvent-surfactant blend comprises combining a solvent with a cationic surfactant.

4. The method of claim 1 or 2, wherein the forming a solvent-surfactant blend comprises combining a solvent with an anionic surfactant.

5. The method of claim 1 or 2, wherein the forming a solvent-surfactant blend comprises combining a solvent with a zwitterionic surfactant.

6. The method of claim 1 or 2, wherein the forming a solvent-surfactant blend comprises combining a solvent with a nonionic surfactant.

7. The method according to anyone of claims I to 6, wherein the forming a solvent-surfactant blend comprises combining a solvent with a surfactant that is selected from the group consisting of lauryl alcohol ethoxylates, linear fatty alcohol ethoxylates (C9-C11), linear fatty alcohol ethoxylates (C12-C13) and linear fatty alcohol ethoxylates (C12-C15).

8. The method according to anyone of claims 1 to 3, wherein the forming a solvent-surfactant blend comprises combining a solvent with a surfactant that is dicocodimethylquaternary.

9. The method according to anyone of claims 1 to 6, wherein the forming a solvent-surfactant blend comprises combining a solvent with a surfactant that is selected from the group consisting of polyorganosiloxanes.

10. The method according to anyone of claims 1 to 9, wherein the forming a solvent-surfactant blend comprises combining a solvent, a surfactant and a glycol ether that is selected from the group consisting of propylene glycol methyl ether, propylene glycol methyl ether acetate, propylene glycol n-butyl ether, ethylene glycol monobutyl ether, diethylene glycol monobutyl ether acetate.

11. The method according to anyone of claims 1 to 10, wherein the forming a solvent-surfactant blend comprises combining a solvent selected from the group consisting of N-methyl-2-pyrrolidone, dimethylformamide, dimethylacetamide, vegetable oil, and dimethyl sulfoxide with a surfactant to form a solvent-surfactant blend.

12. The method according to anyone of claims 1 to 11, wherein the adding a diluent to the solvent-surfactant blend comprises adding a diluent that is selected from the group consisting of water, oil and combination thereof.

13. The method according to anyone of claims 2 to 12, wherein the forming a solvent-surfactant blend and the adding a diluent are carried out such that the emulsified solvent-surfactant blend comprises:
- up to about 25% by volume surfactant and co-surfactant;
- up to about 14% by volume solvent;
- up to about 20% by volume glycol ether; and
- up to about 60% by volume water.

14. The method according to anyone of claims 1 to 13, wherein the subterranean formation is tight gas sand and shale formation.

## Patentansprüche

1. Verfahren zum Behandeln einer unterirdischen Formation, die wenigstens zum Teil dichten Gassand und Schiefergestein enthält, wobei das Verfahren umfasst:
- Bilden einer Lösungsmittel-Tensid-Mischung durch Kombinieren eines Lösungsmittels, eines Tensids und eines Co-Tensids;
- Hinzufügen eines Verdünnungsmittels zu dem Lösungsmittel-Tensid-Gemisch, um eine Mikroemulsion zu bilden;
- Verändern der Benetzbarkeit einer Zerklüftungsfläche der Formation von wasserbenetzt zu gasbenetzt, und
- Verringern der Wassermenge, die von der Zerklüftungsfläche der Formation eingesaugt wird.

2. Verfahren nach Anspruch 1, wobei das Co-Tensid Glykolether ist.

3. Verfahren nach Anspruch 1 oder 2, wobei das Bilden des Lösungsmittel-Tensid-Gemisches das Kombinieren eines Lösungsmittels mit einem kationischen Tensid umfasst.

4. Verfahren nach Anspruch 1 oder 2, wobei das Bilden eines Lösungsmittel-Tensid-Gemisches das Kombinieren eines Lösungsmittels mit einem anionischen Tensid umfasst.

5. Verfahren nach Anspruch 1 oder 2, wobei das Bilden eines Lösungsmittel-Tensid-Gemisches das Kombinieren eines Lösungsmittels mit einem zwitterionischen Tensid umfasst.

6. Verfahren nach Anspruch 1 oder 2, wobei das Bilden eines Lösungsmittel-Tensid-Gemisches das Kombinieren eines Lösungsmittels mit einem nicht ionischen Tensid umfasst.

7. Verfahren nach einem der Ansprüche 1 bis 6, wobei das Bilden eines Lösungsmittel-Tensid-Gemisches das Kombinieren eines Lösungsmittels mit einem Tensid umfasst, das aus der Gruppe gewählt ist, die besteht aus Lauryl-Alkohol-Ethoxylaten, linearen fetthaltigen Alkohol-Ethoxylaten (C9-C11), linearen fetthaltigen Alkohol-Ethoxylaten (C12-C13) und linearen fetthaltigen Alkohol-Ethoxylaten (C12-C15).

8. Verfahren nach einem der Ansprüche 1 bis 3, wobei das Bilden eines Lösungsmittel-Tensid-Gemisches das Kombinieren eines Lösungsmittels mit einem Tensid, das quaternäres Dicoco-Dimethyl ist, umfasst.

9. Verfahren nach einem der Ansprüche 1 bis 6, wobei das Bilden des Lösungsmittel-Tensid-Gemisches das Kombinieren eines Lösungsmittels mit einem Tensid umfasst, das aus der Gruppe gewählt ist, die aus Polyorganosiloxanen besteht.

10. Verfahren nach einem der Ansprüche 1 bis 9, wobei das Bilden eines Lösungsmittel-Tensid-Gemisches das Kombinieren eines Lösungsmittels, eines Tensids und eines Glykolethers umfasst, der aus der Gruppe gewählt ist, die besteht aus Propylenglykol-Metylether, Propylenglykol-Metyletheracetat, Propylenglykol-n-Butylether, Ethylenglykol-Monobutylether, Diethylenglykol-Monobutyletheracetat.

11. Verfahren nach einem der Ansprüche 1 bis 10, wobei das Bilden des Lösungsmittel-Tensid-Gemisches das Kombinieren eines Lösungsmittels, das aus der Gruppe gewählt ist, die besteht aus N-Metyl-2-Pyrrolidon, Dimethylformamid, Dimethylacetamid, Pflanzenöl und Dimethylsulfoxid, mit einem Tensid, um ein Lösungsmittel-Tensid-Gemisch zu bilden, umfasst.

12. Verfahren nach einem der Ansprüche 1 bis 11, wobei das Hinzufügen eines Verdünnungsmittels zu dem Lösungsmittel-Tensid-Gemisch das Hinzufügen eines Verdünnungsmittels umfasst, das aus der Gruppe gewählt ist, die aus Wasser, Öl und Kombinationen hiervon besteht.

13. Verfahren nach einem der Ansprüche 2 bis 12, wobei das Bilden eines Lösungsmittel-Tensid-Gemisches und das Hinzufügen eines Verdünnungsmittels in der Weise ausgeführt werden, dass das emulgierte Lösungsmittel-Tensid-Gemisch umfasst:
- bis zu etwa 25 Vol-% Tensid und Co-Tensid;
- bis zu etwa 14 Vol-% Lösungsmittel;
- bis zu etwa 20 Vol-% Glykolether; und
- bis zu etwa 60 Vol-% Wasser.

14. Verfahren nach einem der Ansprüche 1 bis 13, wobei die unterirdische Formation eine Formation aus dichtem Gassand und Schiefer ist.

## Revendications

1. Procédé pour traiter une formation souterraine comprenant au moins en partie du sable compact gazéifère et des roches de schiste, lequel procédé comprenant :
- la formation d'un mélange solvant-tensioactif en combinant un solvant, un tensioactif, et un co-tensioactif ;
- l'addition d'un diluant au mélange solvant-tensioactif pour former une microémulsion ;
- la modification de la mouillabilité d'une face de fracture de la formation depuis un état mouillé par l'eau à un état mouillé par le gaz, et
- la réduction de la quantité d'eau imbibée dans la face de fracture de la formation.

2. Procédé selon la revendication 1, dans lequel le co-tensioactif est un éther de glycol.

3. Procédé selon la revendication 1 ou 2, dans lequel la formation d'un mélange solvant-tensioactif comprend la combinaison d'un solvant avec un tensioactif cationique.

4. Procédé selon la revendication 1 ou 2, dans lequel la formation d'un mélange solvant-tensioactif comprend la combinaison d'un solvant avec un tensioactif anionique.

5. Procédé selon la revendication 1 ou 2, dans lequel la formation d'un mélange solvant-tensioactif comprend la combinaison d'un solvant avec un tensioactif zwittérionique.

6. Procédé selon la revendication 1 ou 2, dans lequel la formation d'un mélange solvant-tensioactif comprend la combinaison d'un solvant avec un tensioactif non-ionique.

7. Procédé selon l'une quelconque des revendications 1 à 6, dans lequel la formation d'un mélange solvant-tensioactif comprend la combinaison d'un solvant avec un tensioactif choisi dans le groupe constitué par les éthoxylates de l'alcool laurylique, les éthoxylates des alcools gras linéaires (C9-C11), les éthoxylates des alcools gras linéaires (C12-C13) et les éthoxylates des alcools gras linéaires (C12-C15).

8. Procédé selon l'une quelconque des revendications 1 à 3, dans lequel la formation d'un mélange solvant-tensioactif comprend la combinaison d'un solvant avec un tensioactif qui est le sel quaternaire de di(caprylyl)diméthyle (« dicocodimethylquaternary »).

9. Procédé selon l'une quelconque des revendications 1 à 6, dans lequel la formation d'un mélange solvant-tensioactif comprend la combinaison d'un solvant avec un tensioactif choisi dans le groupe constitué par les polyorganosiloxanes.

10. Procédé selon l'une quelconque des revendications 1 à 9, dans lequel la formation d'un mélange solvant-tensioactif comprend la combinaison d'un solvant, d'un tensioactif et d'un éther de glycol qui est choisi dans le groupe constitué par l'éther méthylique du propylèneglycol, l'acétate de l'éther méthylique du propylèneglycol, l'éther n-butylique du propylèneglycol, l'éther monobutylique de l'éthylèneglycol, l'acétate de l'éther monobutylique du diéthylèneglycol.

11. Procédé selon l'une quelconque des revendications 1 à 10, dans lequel la formation d'un mélange solvant-tensioactif comprend la combinaison d'un solvant choisi dans le groupe constitué par la N-méthyl-2-pyrrolidone, le diméthylformamide, le diméthyl-acétamide, une huile végétale, et le diméthylsulfoxyde, avec un tensioactif, pour former un mélange solvant-tensioactif.

12. Procédé selon l'une quelconque des revendications 1 à 11, dans lequel l'addition d'un diluant au mélange solvant-tensioactif comprend l'addition d'un diluant qui est choisi dans le groupe constitué par l'eau, l'huile, et leurs combinaisons.

13. Procédé selon l'une quelconque des revendications 2 à 12, dans lequel la formation d'un mélange solvant-tensioactif et l'addition d'un diluant sont effectuées de façon que le mélange solvant-tensioactif émulsionné comprenne :
- jusqu'à environ 25 % en volume de tensioactif et de co-tensioactif ;
- jusqu'à environ 14 % en volume de solvant ;
- jusqu'à environ 20 % en volume d'éther de glycol ; et
- jusqu'à environ 60 % en volume d'eau.

14. Procédé selon l'une quelconque des revendications 1 à 13, dans lequel la formation souterraine est une formation de sable compact gazéifère et de schiste.
